# EUROPEAN PATENT APPLICATION

(11) **EP 4 455 646 A1**
(43) Date of publication of application: **30.10.2024**
(21) Application number: 22910953.3
(22) Date of filing: 09.12.2022
(51) Int. Cl.: G01N 21/88

(54) **SURFACE SCANNING DEVICE, SURFACE SCANNING METHOD, AUTOMATIC DEFICIENCY-REPAIRING SYSTEM, AND PROGRAM**

(30) Priority: 21.12.2021 JP 2021207503
(71) Applicant: KONICA MINOLTA, INC., Tokyo 100-7015 (JP)
(72) Inventor: SOUMA Yoshihito, Tokyo 100-7015 (JP)
(74) Representative: MFG Patentanwälte Meyer-Wildhagen Meggle-Freund Gerhard PartG mbB
(86) International application number: PCT/JP2022/045476
(87) International publication number: WO 2023/120243

(57) **Abstract**

A surface inspection device (3) includes an image acquisition means (31) of acquiring a plurality of images of an inspected site on a coated surface of a workpiece (100) imaged by an imaging device (2) in a state where a bright and dark pattern of an illumination device (1) that illuminates the inspected site is moved relative to the workpiece (100), a calculation means (32) of calculating a feature representing a surface defect for the plurality of images acquired by the image acquisition means, and an estimation means (33) of estimating a depth from a coated surface of a foreign substance causing the surface defect using change in the feature calculated by the calculation means.

## Description

### Technical Field

The present invention relates to a surface inspection device, a surface inspection method, an automatic defect repair system, and a program capable of estimating the depth from a coated surface of a product such as an automobile of a foreign substance that has contaminated the coated surface to cause a surface defect.

### Background Art

The coated surface of an automobile is typically composed of about four or more layers, and about 80% of automobile coating defects occurs due to foreign substance contamination before coating or during coating.

If the depth from the coated surface of a foreign substance (also referred to as contamination depth) can be estimated, there are various advantages. For example, it can be used for quality control. Specifically, an occurrence rate of the surface defects is monitored for respective contamination depths of a foreign substance, and an alarm is issued upon reaching an abnormal value of the occurrence rate. The rapid improvement of the source can mitigate the increase in the defect rate.

In addition, the estimation of the contamination depth can also be used to improve the flow efficiency in repair processing. That is, in a case where a small foreign substance is present in a deeper layer, the defect can be repaired only by polishing, and automatic repair by a robot is easily applied thereto. On the other hand, in a case of a large foreign substance or in a case where a foreign substance is present near the coated surface, recoating after cutting is required, and repair by manual work is required. Thus, by estimating the contamination depth of a foreign substance and causing a robot to repair only the surface defects that can be automatically repaired, it is possible to decrease the repair cost.

However, there is no technique of estimating the contamination depth of a foreign substance in the coated surface, and there is no other method than scraping the coating surface for checking.

Note that Patent Literature 1 discloses a technique capable of accurately determining whether a defect is a real defect (defect requiring repair) or a false defect (defect not requiring repair).

In addition, Patent Literature 2 discloses a technique of determining the depth of a defect using two types of thresholds for binarization processing and using an area ratio of the defect in images binarized by the respective thresholds.

In addition, Patent Literature 3 discloses a technique of estimating the height or the depth of a defect by generating a complex time image from a time-correlation image imaged with illumination that provides periodic time variation and periodic space variation of light intensity.

### Citation List

### Patent Literature

Patent Literature 1: JP H09-318338 A
Patent Literature 2: WO 2016/006039 A1
Patent Literature 3: JP 2019-174232 A

### Summary of Invention

### Technical Problem

However, Patent Literature 1 does not describe estimation of the contamination depth of a foreign substance.

In addition, although Patent Literature 2 describes determination of the depth of a porous defect on a surface, and Patent Literature 3 describes determination of the depth of surface unevenness, determination of the contamination depth of a foreign substance is not described therein.

The present invention has been made in view of such a technical background, and an object of the present invention is to provide a surface inspection device, a surface inspection method, an automatic defect repair system, and a program capable of estimating the depth from a coated surface of a workpiece of a foreign substance that has contaminated the coated surface. Solution to Problem

The above-described object is achieved by the following means.
(1) A surface inspection device including:
   an image acquisition means of acquiring a plurality of images of an inspected site on a coated surface of a workpiece imaged by an imaging device in a state where a bright and dark pattern of an illumination device that illuminates the inspected site is moved relative to a workpiece;
   a calculation means of calculating a feature representing a surface defect for the plurality of images acquired by the image acquisition means; and
   an estimation means of estimating a depth from a coated surface of a foreign substance causing the surface defect using change in the feature calculated by the calculation means.
(2) The surface inspection device according to the aforementioned item 1, in which the estimation means estimates the depth from the coated surface of the foreign substance using a value of a coefficient a when a quadratic curve of y = ax² + bx + c is fitted to the change in the feature with a frame number of the plurality of images represented as x and the feature represented as y.
(3) The surface inspection device according to the aforementioned item 1, in which the estimation means estimates the depth from the coated surface of the foreign substance using a difference between a maximum value and a minimum value of the feature.
(4) The surface inspection device according to any one of the aforementioned items 1 to 3, in which
   the feature is set, in a case where a set of pixels constituting a defect portion is defined as a defect region in images obtained by binarizing the plurality of images, to the number of pixels in the defect region.
(5) The surface inspection device according to any one of the aforementioned items 1 to 3, in which
   the feature is set, in a case where a set of pixels constituting a defect portion is defined as a defect region in images obtained by binarizing the plurality of images, to a minimum value of a pixel value in the defect region.
(6) An automatic defect repair system including:
   an imaging device that images a plurality of images of an inspected site on a coated surface of a workpiece in a state where a bright and dark pattern of an illumination device that illuminates the inspected site is moved relative to a workpiece;
   the surface inspection device according to any one of claims 1 to 5 that acquires the plurality of images and estimates a depth from a coated surface of a foreign substance causing a surface defect; and
   a repair means that repairs a surface defect based on an estimation result by the surface inspection device.
(7) A surface inspection method including:
   an image acquisition step of acquiring a plurality of images of an inspected site on a coated surface of a workpiece imaged by an imaging device in a state where a bright and dark pattern of an illumination device that illuminates the inspected site is moved relative to a workpiece;
   a calculation step of calculating a feature representing a surface defect for the plurality of images acquired in the image acquisition step; and
   an estimation step of estimating a depth from a coated surface in which a foreign substance causing the surface defect is present using change in the feature calculated in the calculation step.
(8) The surface inspection method according to the aforementioned item 7, in which in the estimation step, the depth from the coated surface of the foreign substance is estimated using a value of a coefficient a when a quadratic curve of y = ax² + bx + c is fitted to the change in the feature with a frame number of the plurality of images represented as x and the feature represented as y.
(9) The surface inspection method according to the aforementioned item 7, in which in the estimation step, the depth from the coated surface of the foreign substance is estimated using a difference between a maximum value and a minimum value of the feature.
(10) The surface inspection method according to any one of the aforementioned items 7 to 9, in which
   the feature is set, in a case where a set of pixels constituting a defect portion is defined as a defect region in images obtained by binarizing the plurality of images, to the number of pixels in the defect region.
(11) The surface inspection method according to any one of the aforementioned items 7 to 9, in which
   the feature is set, in a case where a set of pixels constituting a defect portion is defined as a defect region in images obtained by binarizing the plurality of images, to a minimum value of a pixel value in the defect region.
(12) A program for causing a computer to execute:
   an image acquisition step of acquiring a plurality of images of an inspected site on a coated surface of a workpiece imaged by an imaging device in a state where a bright and dark pattern of an illumination device that illuminates the inspected site is moved relative to a workpiece;
   a calculation step of calculating a feature representing a surface defect for a plurality of images acquired in the image acquisition step; and
   an estimation step of estimating a depth from a coated surface of a foreign substance causing a surface defect using change in a feature calculated in the calculation step.
(13) The program according to the aforementioned item 12 for causing the computer to execute:
   processing of estimating, in the estimation step, the depth from the coated surface of the foreign substance using a value of a coefficient a when a quadratic curve of y = ax² + bx + c is fitted to the change in the feature with a frame number of the plurality of images represented as x and the feature represented as y.
(14) The program according to the aforementioned item 12 for causing the computer to execute:
   processing of estimating, in the estimation step, the depth from the coated surface of the foreign substance using a difference between a maximum value and a minimum value of the feature.
(15) The program according to any one of the aforementioned items 12 to 14, in which
   the feature is set, in a case where a set of pixels constituting a defect portion is defined as a defect region in images obtained by binarizing the plurality of images, to the number of pixels in the defect region.
(16) The program according to any one of claims 12 to 15, in which
   the feature is set, in a case where a set of pixels constituting a defect portion is defined as a defect region in images obtained by binarizing the plurality of images, to a minimum value of a pixel value in the defect region.

### Advantageous Effects of Invention

According to the surface inspection device and the surface inspection method according to the present invention, a bright and dark pattern of an illumination device that illuminates an inspected site on the coated surface of the workpiece moves relative to the workpiece. With the above-described state, a plurality of images of the inspected site imaged by the imaging device is acquired. A feature representing the defect is calculated for the acquired plurality of images. Then, the depth from the coated surface in which the foreign substance causing the defect is present is estimated using change in the calculated feature. This enables various applications, and the present invention can contribute to, for example, the above-described quality control and improvement of flow efficiency in repair processing.

In addition, according to the automatic defect repair system according to the present invention, the defect on the coated surface may be automatically repaired based on the depth from the coated surface of a foreign substance estimated by the surface inspection device.

In addition, the program according to the present invention causes a computer to execute processing of moving, relative to the workpiece, the bright and dark pattern of the illumination device that illuminates the inspected site on the coated surface of the workpiece. The program causes the computer to execute processing of acquiring a plurality of images of the inspected site imaged by the imaging device with the above-described state. The program causes the computer to execute processing of calculating the feature representing the defect for the acquired plurality of images and estimating the depth from the coated surface of a foreign substance causing the defect using change in the calculated feature.

### Brief Description of Drawings

Fig. 1 is a configuration diagram of an automatic defect repair system using a surface inspection device according to an embodiment of the present invention.
Fig. 2 is a perspective view illustrating a configuration example of a bright and dark pattern by an illumination device.
Fig. 3 is a perspective view illustrating another configuration example of the bright and dark pattern by the illumination device.
Figs. 4(A) to (E) illustrate images of vicinity of a front wheel well on the left side of a vehicle body imaged by a camera while moving the workpiece.
Fig. 5(A) illustrates camera original images in a case where a foreign substance is present in a deeper layer from a coated surface, and Fig. 5(B) illustrates images obtained by subjecting the original images to binarization processing with a certain threshold.
Fig. 6(A) illustrates camera original images in a case where a foreign substance is present in a shallower layer from the coated surface, and Fig. 6(B) illustrates images obtained by subjecting the original images to binarization processing with a certain threshold.
Fig. 7 is a scatter diagram plotted with a horizontal axis x representing a frame number and a vertical axis y representing the number of pixels (area) in a defect region which is a feature, for each of the deeper layer indicated in Table 1 and the shallower layer indicated in Table 2.
Fig. 8 is a scatter diagram plotted with the horizontal axis x representing the frame number and the vertical axis y representing a minimum value of a pixel value in the defect region which is the feature, for each of the deeper layer indicated in Table 1 and the shallower layer indicated in Table 2.
Fig. 9 is a cross-sectional view of a sample plate used in an example.
Fig. 10 is a graph illustrating a distribution of a coefficient a of a quadratic term when a quadratic curve is fitted to change in the feature in a case where the number of pixels in the defect region measured using the sample plate is set as the feature.

### Description of Embodiments

Hereinafter, an embodiment of the present invention will be described with reference to the drawings.

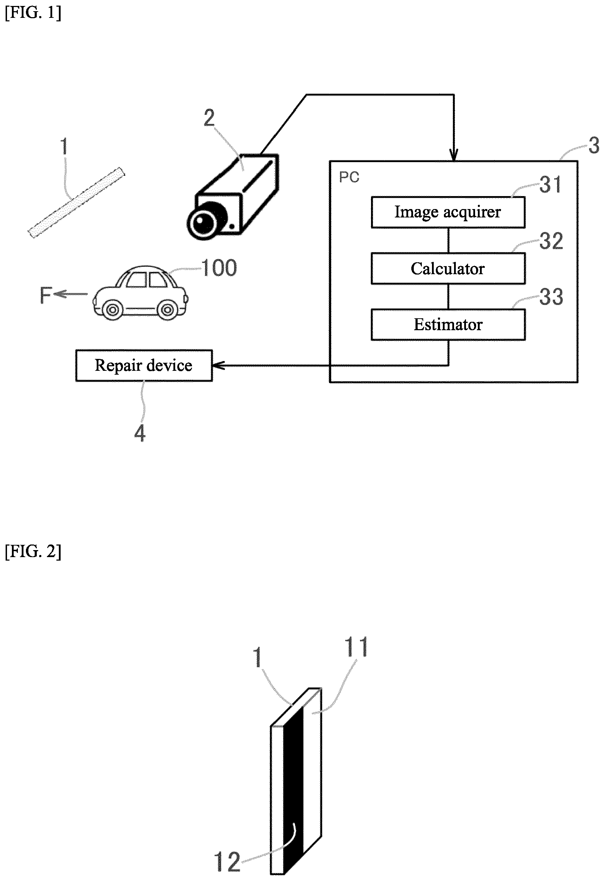

Fig. 1 is a configuration diagram of an automatic defect repair system using a surface inspection device 3 according to an embodiment of the present invention. In the embodiment, a case where a workpiece 100 to be inspected is a vehicle body to which surface coating is applied, an inspected site of the workpiece 100 is a coated surface thereof, a defect of the coated surface is detected, and the depth from the coated surface of contaminating foreign substance in the defect portion is estimated, will be described.

Typically, the surface of the vehicle body is subjected to substrate treatment, metallic coating, clear coating, and the like, and a coating layer having a multilayer structure is formed. A surface defect having a convex shape is generated in the clear layer serving as an uppermost layer due to foreign substance contamination during coating. Note that the workpiece 100 is not limited to a vehicle body and may be any workpiece to which surface coating is applied other than a vehicle body.

An automatic defect repair system illustrated in Fig. 1 includes an illumination device 1 that illuminates the inspected site of the workpiece 100 continuously moving at a predetermined speed in the direction of the arrow F on a conveyor or the like, a camera 2, as an imaging device, that images the inspected site that is illuminated, a surface inspection device 3 that detects a surface defect by acquiring an image of the inspected site imaged by the camera 2 and estimates the depth (contamination depth) from the coated surface of a contaminating foreign substance, and a repair device 4.

In order to detect the surface defect of the workpiece 100, the illumination device 1 needs to emit illumination light having a bright and dark pattern including at least one pair of a bright portion and a dark portion to the inspected site of the workpiece 100. A type of the illumination device 1 is not limited as long as the illumination device 1 can emit the bright and dark pattern including at least one pair of a bright portion and a dark portion. An example of the illumination device 1 includes an LED illumination device as illustrated in Fig. 2, and the like. The LED illumination device illuminates, by covering a part of a planar light emitter with a black mask, the inspected site with one pair of a stripe pattern of a dark portion 12 covered with the black mask and an uncovered bright portion 11 in the movement direction of the workpiece 100.

Note that the bright and dark pattern is not limited to the example illustrated in Fig. 2, and may be a stripe pattern in which there is a plurality of pairs of the bright portion 11 and the dark portion 12.

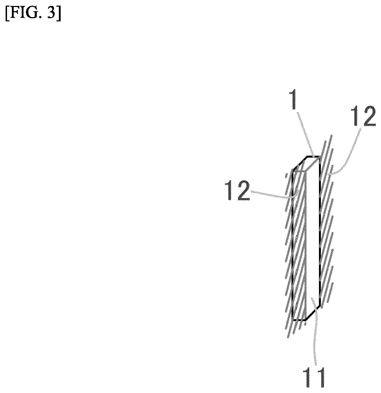

In addition, the dark portion 12 does not need to be formed by covering a part of the light emitting surface of the illumination device 1 with a mask. For example, as illustrated in Fig. 3, the bright and dark pattern may be formed by forming only the bright portion 11 with the illumination device 1 and forming the dark portion 12 around the illumination device 1.

In addition, Fig. 1 illustrates a configuration in which the workpiece 100 continuously moves to gradually shift a relative positional relationship between the bright and dark pattern and the workpiece 100. A configuration may be adopted in which the workpiece 100 is fixed and the illumination device 1 moves. In this case, the camera 2 moves together with the illumination device 1.

In addition, both of the workpiece 100 and the illumination device 1 may move at different moving speeds, and the one may move relative to the other, accordingly.

In addition, in a case where the illumination device 1 is constituted by a display panel such as an LED, the bright and dark pattern displayed on the display surface may be scrolled on the display surface, and the bright and dark pattern and the workpiece 100 may move relative to each other, accordingly, without physical moving of the illumination device 1.

The camera 2 is a CCD camera or a CMOS camera, and may be a camera that generates a monochrome image or a camera that generates a color image. In the embodiment, while at least one of the bright and dark pattern of the illumination device 1, and the workpiece 100 moves, the camera 2 sequentially images a preset inspection range of the workpiece 100 at a predetermined time interval.

Note that the imaging operation of the camera 2, the moving operation of the workpiece 100 or the illumination device 1, control of the bright and dark pattern of the illumination device 1, and the like are executed by a controller (not illustrated). Alternatively, they may be controlled by the surface inspection device 3.

The surface inspection device 3 includes a personal computer (PC) and the like, and an arithmetic processing unit such as a CPU executes an operation program stored in a storage, thereby performing estimation processing of the contamination depth of a foreign substance.

The surface inspection device 3 functionally includes an image acquirer 31, a calculator 32, and an estimator 33.

The image acquirer 31 acquires an image of the workpiece 100 imaged by the camera 2. The image may be directly acquired from the camera 2 through wired communication or wireless communication, or the image imaged by the camera 2 may be temporarily stored in an external storage and the stored image may be acquired from the storage device.

The calculator 32 calculates the feature representing the surface defect (so-called seeding) for the acquired plurality of images, and the estimator 33 estimates the contamination depth of the foreign substance causing the defect using change in the feature for each image calculated by the calculator 32. The feature representing the surface defect and the estimation processing of the contamination depth will be described below.

In a case where the contamination depth of a foreign substance estimated by the surface inspection device 3 is a depth repairable by surface polishing, the repair device 4 performs polishing repair, using a robot, of the surface defect portion generated due to the foreign substance contamination.

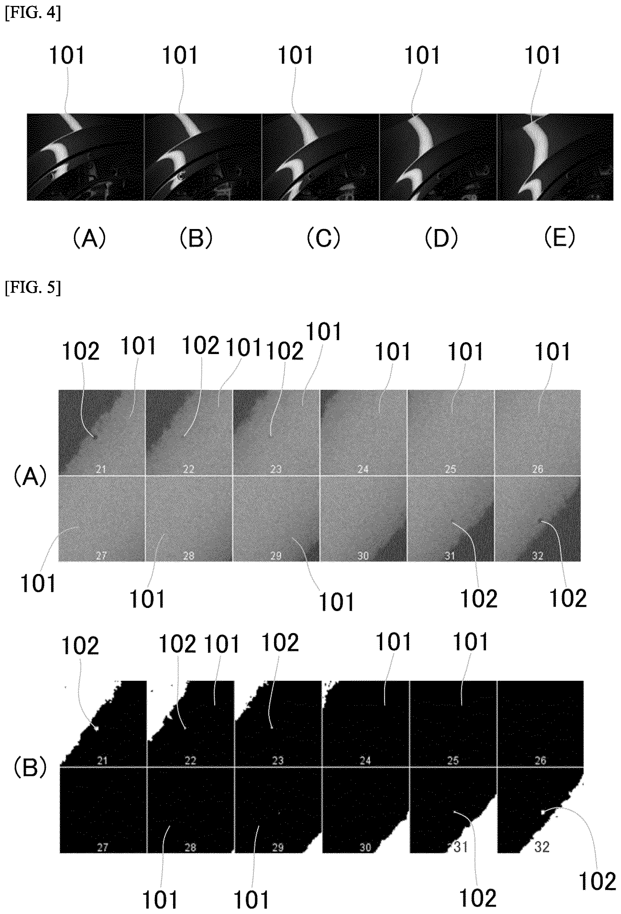

Figs. 4(A) to (E) illustrate images of the vicinity of a front wheel well on the left side of the vehicle body imaged by the camera 2 while moving the workpiece 100. A light band 101 corresponding to the bright portion 11 of the bright and dark pattern of the illumination device 1 reflected on the workpiece 100 is detected while moving the workpiece 100, and a defect image in the light band 101 is detected.

Next, the surface defect generated due to the foreign substance contamination before coating or during coating will be described.

Fig. 5(A) illustrates a plurality of camera original images in a case where a foreign substance is present in a deeper layer from the coated surface, and Fig. 5(B) illustrates images obtained by subjecting the original images to binarization processing with a certain threshold. A dark portion (white in the images) appearing in the light band 101 (black in the images) in Fig. 5(B) is the surface defect portion, which is referred to as a defect region 102. Expansion processing or contraction processing may be performed on the defect region 102. In addition, a numerical value displayed on each image is a frame number of the image.

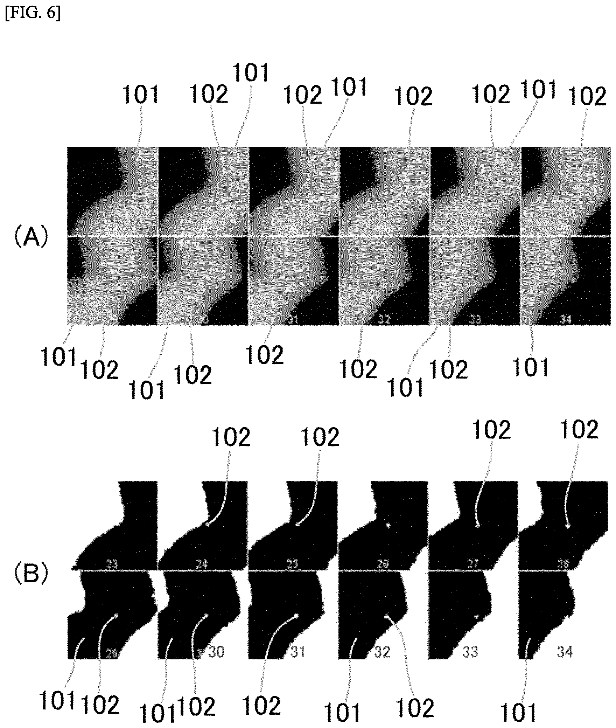

Similarly, Fig. 6(A) illustrates a plurality of camera original images in a case where a foreign substance is present in a shallower layer from the coated surface, and Fig. 6(B) illustrates images obtained by subjecting the original images to binarization processing with a certain threshold. Similarly to Fig. 5(B), the dark portion which is the defect region 102 appears in the light band 101 of Fig. 6(B). Note that the frame numbers of the images in Fig. 5 and the frame numbers of the images in Fig. 6 have no relation.

As is apparent from comparison between the images of Figs. 5 and 6, the luminance change of the defect region 102 in the original images is small in a case where a foreign substance is present in the shallower layer, and the luminance change is large in a case where a foreign substance is present in the deeper layer. In the binarized images, the area change of the defect region 102 is small in a case where a foreign substance is present in the shallower layer, and the area change is large in a case where a foreign substance is present in the deeper layer.

Table 1 indicates, in a case where a foreign substance is present in the deeper layer, calculation results of the area of the defect region 102 (the number of pixels in the defect region) and calculation results of the minimum value among pixel values (luminance) of pixels in the defect region 102. Table 2 indicates similar calculation results in a case where a foreign substance is present in the shallower layer. The calculation is performed by the calculator 32 of the surface inspection device 3. As described above, the defect region 102 is a closed white circle region in the binarized images illustrated in Fig. 5(B) and Fig. 6(B).

**[Table 1]**

| Deeper Layer | | |
|---|---|---|
| Frame Number | Area | Minimum Value |
| 1 | 20 | 33 |
| 22 | 4 | 49 |
| 23 | 4 | 53 |
| 29 | 1 | 58 |
| 31 | 4 | 45 |
| 32 | 19 | 34 |
| Quadratic Coefficient | 0.786 | -1.037 |
| Maximum Value - Minimum Value | 19 | 25 |

**[Table 2]**

| Shallower Layer | | |
|---|---|---|
| Frame Number | Area | Minimum Value |
| 24 | 13 | 16 |
| 25 | 13 | 20 |
| 26 | 14 | 23 |
| 27 | 16 | 25 |
| 28 | 18 | 18 |
| 29 | 15 | 21 |
| 30 | 15 | 24 |
| 31 | 16 | 21 |
| 32 | 16 | 17 |
| 33 | 13 | 12 |
| Quadratic Coefficient | -0.155 | -0.398 |
| Maximum Value - Minimum Value | 5 | 13 |

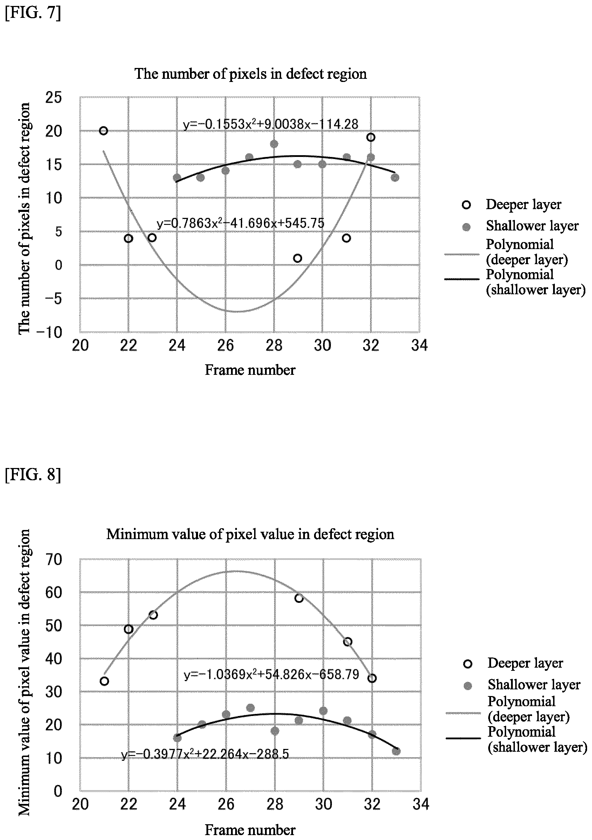

Fig. 7 is a scatter diagram plotted with a horizontal axis x representing the frame number and a vertical axis y representing the number of pixels (area) in the defect region 102 which is the feature, for each of the deeper layer indicated in Table 1 and the shallower layer indicated in Table 2. Fig. 8 is a scatter diagram similarly plotted in a case where the minimum value of the pixel value in the defect region 102 is set as the feature.

In Fig. 7, when a quadratic curve is fitted to plotted points with the least squares method, the quadratic expression (expression of the quadratic curve) for the deeper layer is expressed as y = 0.7863x² - 41.696x + 545.75. The quadratic expression for the shallower layer is expressed as y = -0.1553x² + 9.0038x - 114.28. Consequently, the values of the coefficient a of the quadratic term is about 0.786 in the deeper layer as indicated in Table 1 and is about - 0.155 in the shallower layer as indicated in Table 2.

On the other hand, similarly in Fig. 8, when a quadratic curve is fitted to plotted points with the least squares method, the quadratic expression for the deeper layer is expressed as y = - 1.0369x² + 54.826x - 658.79. The quadratic expression for the shallower layer is expressed as y = -0.3977x² + 22.264x - 288.5. Consequently, the values of the coefficient a of the quadratic term is about -1.037 in the deeper layer as indicated in Table 1 and is about -0.398 in the shallower layer as indicated in Table 2.

As is apparent from Fig. 7 and Fig. 8, it is found that the contamination depth from the surface of a foreign substance can be estimated with, as an indicator, the coefficient a of the quadratic term in a case where the number of pixels (area) in the defect region 102 or the minimum value of the pixel value in the defect region 102 is set as the feature and the change in the feature for each image is fitted with the quadratic expression.

In addition, the numerical value of a difference between the maximum value and the minimum value of the feature is greater in the case of the deeper layer illustrated in Fig. 7 than in the case of the shallower layer illustrated in Fig. 8, so that it is found that the depth from the surface of the foreign substance can be estimated with, as an indicator, the difference between the maximum value and the minimum value of the feature.

In addition, in a case where the area (the number of pixels) in the defect region 102 is set as the feature amount, the feature of a frame in which the defect region 102 does not exist, among the frames between the first frame number and the last frame number in which the defect region 102 appears, may be set to 1. Furthermore, the feature may be normalized by dividing by the maximum value or the minimum value of the feature.

Next, an example of the present invention will be described below.

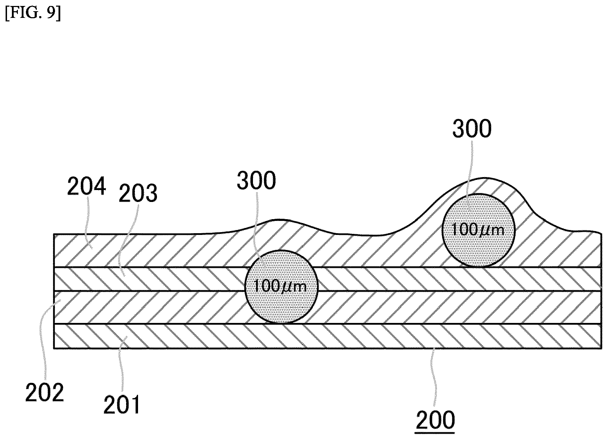

A sample plate 200 as illustrated in Fig. 9 was prepared. The sample plate 200 was prepared as follows. Coating is performed with a plurality of silica beads 300 having diameters of 100 µm, 150 µm, and 200 µm arranged, as foreign substances, onto each of the surface of an electrodeposition (ED) layer 201, the surface of a primer (intermediate coat) layer 202 having a thickness of 45 µm, and the surface of a base layer (base coat) 203 having a thickness of 30 µm. Then, onto the surface, a clear layer (clear coat) 204 having a thickness of 45 µm is further coated. The sample plate 200 was moved while being illuminated with the illumination light having the bright and dark pattern, and the surface of the sample plate 200 was imaged by the camera 2 to obtain a plurality of images.

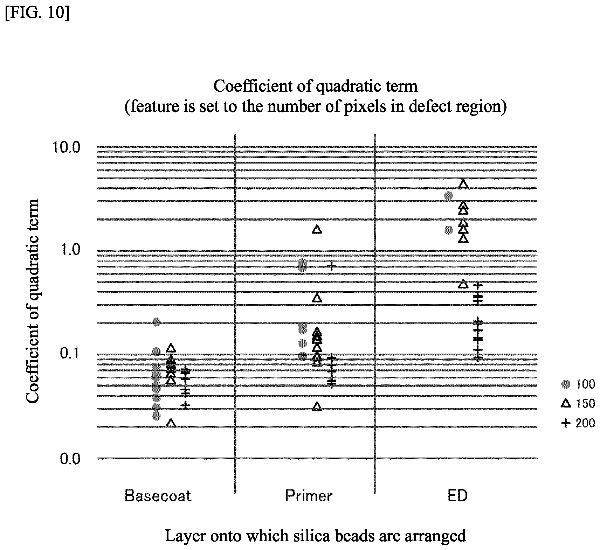

Next, the surface inspection device 3 set, as the feature, the number of pixels of each of the plurality of defect regions 102 corresponding to the plurality of silica beads 300 at each of depth positions obtained from the imaged images, while setting the frame number as x and the feature as y. Similarly to Fig. 7, the surface inspection device 3 fitted the quadratic curve of y = ax² + bx + c to the change in the feature for each imaged image with the least squares method, and calculated the respective coefficients a of the quadratic term. At this time, the surface inspection device 3 set the feature to 1 for the image in which the defect region 102 was not found, and all of the features were normalized with the minimum value. The calculation results are illustrated in Fig. 10.

It is found from Fig. 10 that when the silica beads 300 have a size of up to 150 µm, the coefficients a of the quadratic term are a group of values having a significant difference for each contamination depth. Consequently, it is found that the present position (contamination depth) of the silica beads 300 can be estimated to some extent using the coefficient a of the quadratic term.

The surface defect generated due to the foreign substance contamination can be repaired by polishing of the surface only in a case where the foreign substance is small and is present in a deeper layer. Thus, as described with Fig. 1, it is possible to incorporate the repair device 4 that performs the polishing repair using a robot, into the system. According to the system, it is possible to cause the repair device 4 to automatically repair only a defect that can be repaired by polishing in accordance with the contamination depth of the foreign substance in the surface defect site estimated by the surface inspection device 1, and thus the repair processing is made more efficient.

Although one embodiment of the present invention has been described above, the present invention is not limited to the above-described embodiment. For example, although the case where the surface coating of the workpiece 100 is multilayer coating has been described, it may be single-layer coating.

This application claims the benefit of priority to Japanese Patent Application No. 2021-207503 filed on Dec. 21, 2021, the disclosure of which is incorporated herein by reference in its entirety.

### Industrial Applicability

The present invention is applicable to, for example, a surface inspection device and the like capable of estimating the depth from a coated surface of a product such as an automobile of a foreign substance that has contaminated the coated surface to cause a surface defect. Reference Signs List

- 1: illumination device
- 2: imaging device (camera)
- 3: surface inspection device
- 4: repair device
- 11: bright portion
- 12: dark portion
- 100: workpiece
- 101: light band
- 102: defect region
- 200: sample plate
- 201: electrodeposition layer
- 202: primer layer
- 203: base layer
- 204: clear layer
- 300: silica beads (foreign substance)

## Claims

1. A surface inspection device comprising:
an image acquisition means of acquiring a plurality of images of an inspected site on a coated surface of a workpiece imaged by an imaging device in a state where a bright and dark pattern of an illumination device that illuminates the inspected site is moved relative to a workpiece;
a calculation means of calculating a feature representing a surface defect for the plurality of images acquired by the image acquisition means; and
an estimation means of estimating a depth from a coated surface of a foreign substance causing the surface defect using change in the feature calculated by the calculation means.

2. The surface inspection device according to claim 1, wherein
the estimation means estimates the depth from the coated surface of the foreign substance using a value of a coefficient a when a quadratic curve of y = ax² + bx + c is fitted to the change in the feature with a frame number of the plurality of images represented as x and the feature represented as y.

3. The surface inspection device according to claim 1, wherein
the estimation means estimates the depth from the coated surface of the foreign substance using a difference between a maximum value and a minimum value of the feature.

4. The surface inspection device according to any one of claims 1 to 3, wherein
the feature is set, in a case where a set of pixels constituting a defect portion is defined as a defect region in images obtained by binarizing the plurality of images, to the number of pixels in the defect region.

5. The surface inspection device according to any one of claims 1 to 3, wherein
the feature is set, in a case where a set of pixels constituting a defect portion is defined as a defect region in images obtained by binarizing the plurality of images, to a minimum value of a pixel value in the defect region.

6. An automatic defect repair system comprising:
an imaging device that images a plurality of images of an inspected site on a coated surface of a workpiece in a state where a bright and dark pattern of an illumination device that illuminates the inspected site is moved relative to a workpiece;
the surface inspection device according to any one of claims 1 to 5 that acquires the plurality of images and estimates a depth from a coated surface of a foreign substance causing a surface defect; and
a repair means that repairs a surface defect based on an estimation result by the surface inspection device.

7. A surface inspection method comprising:
an image acquisition step of acquiring a plurality of images of an inspected site on a coated surface of a workpiece imaged by an imaging device in a state where a bright and dark pattern of an illumination device that illuminates the inspected site is moved relative to a workpiece;
a calculation step of calculating a feature representing a surface defect for the plurality of images acquired in the image acquisition step; and
an estimation step of estimating a depth from a coated surface in which a foreign substance causing the surface defect is present using change in the feature calculated in the calculation step.

8. The surface inspection method according to claim 7, wherein
in the estimation step, the depth from the coated surface of the foreign substance is estimated using a value of a coefficient a when a quadratic curve of y = ax² + bx + c is fitted to the change in the feature with a frame number of the plurality of images represented as x and the feature represented as y.

9. The surface inspection method according to claim 7, wherein
in the estimation step, the depth from the coated surface of the foreign substance is estimated using a difference between a maximum value and a minimum value of the feature.

10. The surface inspection method according to any one of claims 7 to 9, wherein
the feature is set, in a case where a set of pixels constituting a defect portion is defined as a defect region in images obtained by binarizing the plurality of images, to the number of pixels in the defect region.

11. The surface inspection method according to any one of claims 7 to 9, wherein
the feature is set, in a case where a set of pixels constituting a defect portion is defined as a defect region in images obtained by binarizing the plurality of images, to a minimum value of a pixel value in the defect region.

12. A program for causing a computer to execute:
an image acquisition step of acquiring a plurality of images of an inspected site on a coated surface of a workpiece imaged by an imaging device in a state where a bright and dark pattern of an illumination device that illuminates the inspected site is moved relative to a workpiece;
a calculation step of calculating a feature representing a surface defect for a plurality of images acquired in the image acquisition step; and
an estimation step of estimating a depth from a coated surface of a foreign substance causing a surface defect using change in a feature calculated in the calculation step.

13. The program according to claim 12 for causing the computer to execute:
processing of estimating, in the estimation step, the depth from the coated surface of the foreign substance using a value of a coefficient a when a quadratic curve of y = ax² + bx + c is fitted to the change in the feature with a frame number of the plurality of images represented as x and the feature represented as y.

14. The program according to claim 12 for causing the computer to execute:
processing of estimating, in the estimation step, the depth from the coated surface of the foreign substance using a difference between a maximum value and a minimum value of the feature.

15. The program according to any one of claims 12 to 14, wherein
the feature is set, in a case where a set of pixels constituting a defect portion is defined as a defect region in images obtained by binarizing the plurality of images, to the number of pixels in the defect region.

16. The program according to any one of claims 12 to 14, wherein
the feature is set, in a case where a set of pixels constituting a defect portion is defined as a defect region in images obtained by binarizing the plurality of images, to a minimum value of a pixel value in the defect region.
